# EUROPEAN PATENT APPLICATION

(11) **EP 3 418 775 A1**
(43) Date of publication of application: **26.12.2018**
(21) Application number: 16890445.6
(22) Date of filing: 15.02.2016
(51) Int. Cl.: G01S 17/95

(54) **WIND VELOCITY MEASURING SYSTEM**

(71) Applicant: The University Of Tokyo, Tokyo 113-8654 (JP); NT Systems Corporation, Tokyo 101-0035 (JP); Fieldpro, Inc., Higashimurayama-shi, Tokyo 189-0001 (JP)
(72) Inventor: IIDA, Makoto, Tokyo 113-8654 (JP); FUJIO, Hiroaki, Tokyo 113-8654 (JP); KATAYAMA, Atsushi, Tokyo 101-0035 (JP); NAITO, Hisahiro, Tokyo 101-0035 (JP); SATO, Mitsuaki, Tokyo 101-0035 (JP); HIROSE, Shigeki, Higashimurayama-shi Tokyo 189-0001 (JP)
(74) Representative: SR Huebner - Munich Patentanwaltspartnerschaft mbB
(86) International application number: PCT/JP2016/054229
(87) International publication number: WO 2017/141302

(57) **Abstract**

[Problem to be Solved]

Provided is a wind velocity measurement system capable of precisely measuring wind velocities, and obtaining wind fluctuations.

[Solving Means]

When the emission device 10 emits a plurality of laser beams in different emission directions, the individual control unit 12 controls the emission times of the plurality of laser beams emitted from the emission device 10, on the basis of instruction information from the overall control unit 14. The emission times are controlled by using synchronized clocks, and thus, laser beams can be emitted at precise timing. Further, the overall control unit 14 can precisely calculate a wind velocity, on the basis of a Doppler shift calculated from backscattered lights of the laser beam emitted at the precise time measured by the emission device 10.

## Description

### Technical Field

The present disclosure relates to a wind velocity measurement system.

### Background Art

Conventionally, a Laser Imaging Detection and Ranging (LIDAR) has been used, wherein laser beams are irradiated into the air, Doppler shift of the backscattered lights from the particles in the air, for example, aerosols, water drops, dust particles, etc., are measured, and wind distribution in the space is determined. For example, the below-mentioned Patent Document 1 discloses an example of a LIDAR wherein laser beams are irradiated in a plurality of directions.

Further, for example, two or three LIDARs may be arranged so that their lines of sight intersect two-dimensionally or three-dimensionally. Thereby, two-dimensional or three-dimensional wind direction data and wind velocity data can be obtained. For example, the below-mentioned Patent Document 2 discloses an example of using a plurality of LIDARs for measuring a three-dimensional wind velocity vector.

### Prior Art

### [Patent Document]

[Patent Document 1] Japanese Unexamined Patent Publication (Kohyo) No. 2015-517094
[Patent Document 2] U.S. Patent No. 8,701,482

### Summary

### Problems to be Solved by the Present Disclosure

However, in order to correctly identify the three-dimensional wind direction and wind velocity by laser irradiation from the LIDAR, three-axis or more laser measurement information is necessary. Further, a plurality of laser beams should be irradiated at the same time or at correct times. Therefore, in a conventional method, measurement is performed for a comparatively long time by a plurality of laser beams, and an average property of the spatial wind distribution is statistically determined. Namely, according to such a conventional method, an average wind velocity can be determined, but "fluctuations of wind" cannot be correctly determined.

One of the objectives of the present disclosure is to provide a wind velocity measurement system capable of correctly measuring wind velocities, and capable of determining wind fluctuations.

### Solving Means

In order to attain the above objectives, an embodiment of the present disclosure is a wind velocity measurement system comprising: an emission means which emits a plurality of laser beams emitted to different directions; an emission time control means which controls emission times of the plurality of laser beams emitted from the emission means; a Doppler shift measurement means which detects the backscattered lights of the emitted laser beams, and measures Doppler shifts of the laser beam; and a calculation means which calculates a wind velocity on the basis of an output from the Doppler shift measurement means.

Preferably, the emission means emits three or more laser beams.

Preferably, the emission time control means controls the emission means to emit the plurality of laser beam simultaneously, or at a predetermined time interval.

Preferably, the plurality of laser beams emitted from the emission means pass within a predetermined range from a point in the air in which a wind velocity is to be measured.

Preferably, the calculation means obtains a wind distribution from the calculated wind velocity.

Preferably, the wind velocity calculated by the calculation means is used for operation management of a wind-power plant.

### Effect

According to the present disclosure, wind velocities can be accurately measured, and wind fluctuations can be determined.

### Brief Description of Drawings

FIG. 1 is a view showing a constitutional example of the wind velocity measurement system according to an embodiment.
FIG. 2 is an explanatory view of a laser beam emission method when a wind velocity is measured by the wind velocity measurement system according to an embodiment.
FIG. 3 is a flow chart showing an operation example of the wind velocity measurement system according to an embodiment.

### Embodiment

Hereinbelow, an embodiment of the present disclosure (hereinbelow, referred to as an embodiment) is to be explained, with reference to the drawings.

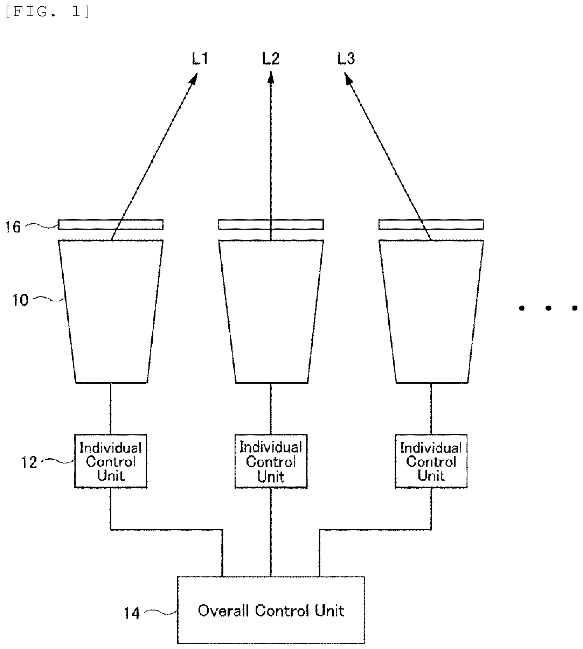

FIG. 1 shows a constitutional example of the wind velocity measurement system according to an embodiment. In FIG. 1, the wind velocity measurement system comprises an emission device 10, an individual control unit 12, and an overall control unit 14.

The emission device 10 is a device emitting laser beams into the air, and can be constituted by, for example, a LIDAR. Preferably, an observation unit 16 which detects the emission time of an emitted laser beam, is arranged near a laser emission port of the emission device 10. In the example shown in FIG. 1, three emission devices 10 are used, but the present disclosure is not limited thereto. In order to emit laser beams in different directions, having at least two emission devices is sufficient. However, as the number of laser beams (the number of emission directions of laser beams) increases, the observation accuracy increases. Thus, preferably, the number of the emission device 10 is three or more. Further, by providing three or more emission devices 10 to emit three or more laser beams, the wind velocity can be measured three-dimensionally. In the example of FIG. 1, there are a plurality of (three) emission devices 10. However, a plurality of laser beams can be emitted in different directions from one LIDAR.

In the example of FIG. 1, L1, L2, and L3 represent laser beams emitted in different directions from the emission devices 10. The number of laser beams to be emitted is not limited to three. The plurality of laser beams L1, L2, and L3 are emitted from the emission devices 10 in a way so that all the laser beams pass through a predetermined range from a point in the air which is subjected to the wind velocity measurement. Here, clearly determining the predetermined range is difficult, but as the laser beams pass closer to the point (converged to the point) in the air to be subjected to the wind velocity measurement, the observation accuracy is increased. Accordingly, when the wind is weak and the wind fluctuation is small, even if the predetermined range is wide, the observation accuracy can be maintained sufficiently high. On the other hand, when the wind is strong and the wind fluctuation is large, the predetermined range should be set narrow, in order to maintain the observation accuracy sufficiently high.

Further, in order to control the directions of the plurality of laser beams emitted from the emission device 10, the observation unit 16 preferably has a measurement function to measure an emission angle of the laser beam. Here, a structure that the below-mentioned individual control unit 12 controls the emission angle of the laser beam, is preferable. The emission angle of the laser beam can be changed by using, for example, an optical system of the LIDAR, an externally-arranged sensor, etc.

The individual control unit 12 is provided corresponding to each emission device 10. In response to the instructions from the overall control unit 14, the individual control unit 12 controls the time at which the laser beam is emitted from the emission device 10 (corresponding to the emission time control means of the present disclosure). Each individual control unit 12 is provided with a clock for controlling time. Time signals are obtained from data communications satellite, such as a GPS satellite, etc., to synchronize the plurality of individual control units 12, i.e., to synchronize the clocks. When the emission device 10 is constituted by one LIDAR which emits a plurality of laser beams in different directions, there may be provided with one individual control unit 12 which controls the emission of a plurality of laser beams.

The overall control unit 14 outputs, to the individual control unit 12, instruction information to instruct the emission timing of a laser beam emitted from each emission device 10. The emission timing may be emissions at the same time or emissions at different times with a predetermined interval, but is not limited to these. Emissions may be performed while emission intervals are appropriately changed among the emission devices 10. The length of the emission time of the laser beam, the length of the emission interval between the emission devices 10 when emissions are performed at different times with a predetermined interval, etc., can be controlled in the order of, for example, from several tens of milliseconds (ms) to several seconds (s). Thereby, the below-mentioned high-speed measurement of the Doppler shift becomes possible. Conventionally, the Doppler shift is output as one-second data, and an average value of ten minutes is guaranteed. However, according to the high-speed measurement of the present embodiment, high temporal resolution measurement (with an average value of a shorter period of time) of the Doppler shift becomes possible.

The emission time of the laser beam is determined by a user depending on the magnitude of the change of the wind velocity (wind fluctuation) in the area in which the wind velocity is to be measured, and the like. Further, communication between the overall control unit 14 and the individual control unit 12 can be performed through an appropriate line, such as the Internet, etc.

According to the present embodiment, as mentioned above, the clocks of the individual control units 12 are precisely synchronized, and thus, laser beams can be emitted at precise emission times (timing) in response to the instruction information from the overall control unit 14. When the observation unit 16 which detects emission times of the laser beams is arranged near a laser emission port of the emission device 10, emission times of the laser beams can be known. Accordingly, precise simultaneity of time can be surely achieved when laser beams are emitted simultaneously, and precise times (timing) can be surely achieved when emission times are different with each other. Thereby, the wind velocity can be measured at a high resolution.

The LIDAR constituting the emission device 10 is provided with a light-receiving unit, to measure the Doppler shift of the laser beams backscattered by the aerosols in the air. In this case, the emission device 10 focuses the laser beams on a focal point in the air, and scattered lights from the focal point are observed. Here, the distance from the emission device 10 to the focal point can be obtained by a conventionally known method.

The overall control unit 14 receives the measurement data of the Doppler shift through the individual control unit 12. This measurement data of the Doppler shift includes observation position information obtained by the LIDAR. The observation position information is information regarding a position where the Doppler shift is measured in the laser beam emission direction, i.e., information regarding the distance from the position of the emission device 10 to the focal point. According to the observation position information, the distance between the position where each of the laser beams emitted from the emission device 10 passes through, and the above-mentioned point in the air in which the wind velocity is measured, can be determined.

The overall control unit 14 calculates the wind velocity (wind velocity and wind direction) at the point in the air in which the wind velocity is measured, on the basis of the measurement data of the Doppler shift (corresponding to the calculation means of the present disclosure). As described above, the measurement data of the Doppler shift includes the observation position information obtained by the LIDAR. Thus, the overall control unit 14 can obtain wind distribution, distribution of wind velocities at respective observation positions, by combining observation position information with the calculation result of the wind velocities.

The wind velocity and/or the wind distribution calculated by the overall control unit 14 can be used for the operation management of a wind-power plant, the selection of an appropriate place for a wind-power plant, and the like. Normally, a wind-power plant is located in an area having large wind fluctuations, such as the mountain area, the seaside area, and the like. Thus, selection of the installation location and operation therein should be performed while precisely understanding the wind fluctuations. In the wind velocity measurement system according to the present embodiment, wind velocities can be measured at high speeds while laser beams are emitted at precise times, and thus, the three-dimensional fluctuations of the winds and the wind distribution can be precisely understood. Therefore, this system can be preferably used for the operation management of a wind power station and for selecting an appropriate place for the wind power generation.

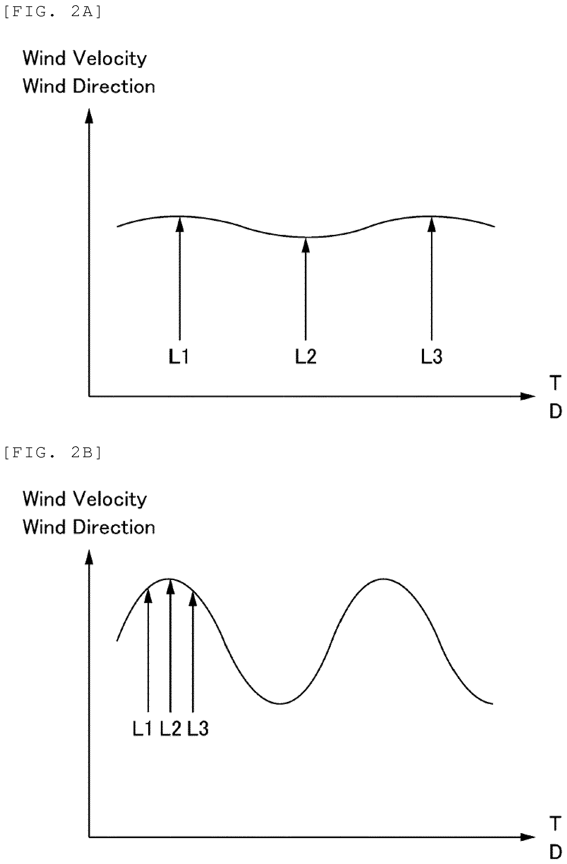

FIG. 2A and FIG. 2B are explanatory views of a laser beam emission method when wind velocities are measured by the wind velocity measurement system according to the present embodiments. In FIG. 2A and FIG. 2B, each vertical axis represents the wind velocity or the wind direction and each horizontal axis represents the time course T or the distance D from an appropriate reference point. FIG. 2A shows an example in which temporal and/or spacial fluctuations of the wind is small (fluctuations of the wind velocities or the wind directions are small), whereas FIG. 2B shows an example in which temporal and/or spacial fluctuations of the wind is large (fluctuations of the wind velocities or the wind directions are large). In FIG. 2A and FIG. 2B, L1, L2, and L3 represent laser beams emitted from the emission device 10, and the wind velocities are measured three-dimensionally.

In the case of FIG. 2A, the wind fluctuations are small, and thus, difference in the measurement results is small, between any locations in the air, and between any measurement times. Therefore, even if the emission times and/or the emission directions of the laser beams L1, L2, and L3 are largely different, accuracy of the measurement results of the wind velocities can be maintained high. FIG. 2A shows the laser beams L1, L2, and L3 that are temporally and/or spatially distant from each other. This means that even if the emission times and/or the emission directions of the laser beams are largely different, the overall control unit 14 can precisely calculate the three-dimensional wind velocities on the basis of the measurement data of the Doppler shift obtained by the laser beams L1, L2, and L3. A large difference between the emission directions of the laser beams indicates that the convergence degree of the laser beams converging to a point in the air in which the wind velocities are to be measured, is small. Namely, the measurement is performed by a laser beam which passes with a large shortest distance from the convergence point.

On the other hand, in the case of FIG. 2B, wind fluctuations are large, and thus, if the emission times and/or the emission directions of the laser beams L1, L2, and L3 are largely different from each other, accuracy of the measurement results of the wind velocities cannot be maintained high. Therefore, in the example shown in FIG. 2B, the laser beams L1, L2, and L3 are irradiated closely to each other in terms of time and/or space (differences of emission times and/or emission directions are small), so that the overall control unit 14 can precisely calculate the three-dimensional wind velocities on the basis of the measurement data of the Doppler shift obtained by these laser beams L1, L2, and L3. A small difference between the emission directions of the laser beams indicates that the convergence degree of the laser beams converging to a point in the air in which the wind velocities are to be measured, is large. Namely, the measurement can be performed only by a laser beam which passes with a small shortest distance from the convergence point (for example, a laser beam with an accuracy of 50 cm to 1 m at the height of 100 m).

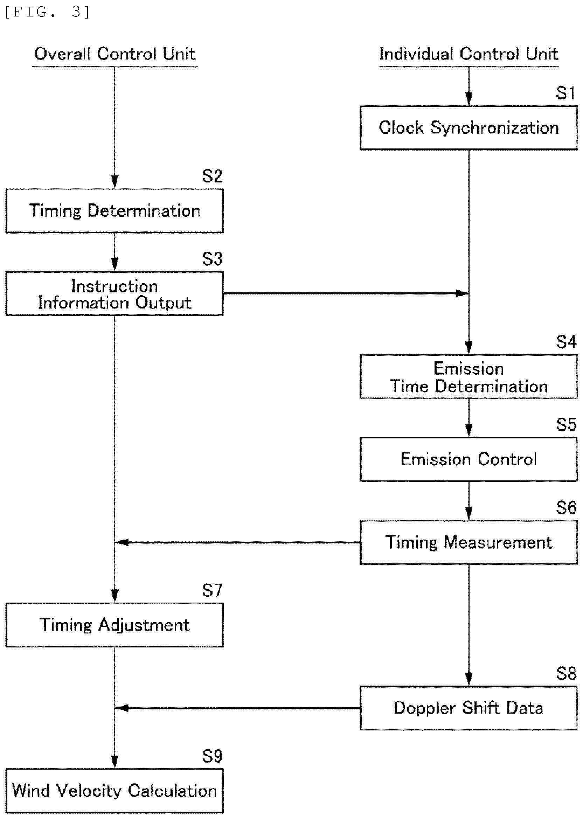

FIG. 3 is a flow-chart showing an operation example of the wind velocity measurement system according to the present embodiment. In the example of FIG. 3, three or more laser beams to obtain three-dimensional wind velocities.

In FIG. 3, each of a plurality of individual control units 12 acquires a time signal from a data communication satellite, etc., for clock synchronization among the plurality of individual control units 12 (S1).

Further, the overall control unit 14 determines emission timing of laser beams emitted from the emission device 10, on the basis of timing information, etc., input by a user (S2). The emission timing may be indicated by a group of emission times from each emission device 10, or by the sequential order among the emission devices 10 to perform emission, together with the time difference of emissions (emission interval) from the emission devices 10. However, the emission timing can be indicated by any other ways without limitation, as far as there is information which can determine when a laser beam is emitted from which emission device 10.

Next, the overall control unit 14 outputs instruction information instructing the emission timing determined by S2, to each of the individual control units 12 controlling each of the emission devices 10 (S3).

The individual control unit 12 determines the time that a laser beam is emitted from the emission device 10, on the basis of the instruction information received in S3 (S4). A laser beam is emitted from each emission device 10 controlled by each individual control unit 12 on the time determined in S4 (S5). Further, the time indicated by a time controlling clock provided in the individual control unit 12, can be used as a time to emit a laser beam. As mentioned above, the time controlling clocks are synchronized among the individual control units 12, and thus, the time to emit a laser beam from each emission device 10 can be precisely controlled.

The individual control unit 12 notifies the overall control unit 14 of the time that the laser beam is emitted from the emission device 10 controlled by the individual control unit 12 itself, the laser beam being detected by the observation unit 16 (S6). The overall control unit 14 can adjust the emission timing on the basis of the emission times of the laser beams notified from the individual control units 12 (S7). Further, if the observation unit 16 measures the emission angle of the laser beam, together with the emission time thereof, preferably, the individual control unit 12 also notifies the overall control unit 14 of the data of emission angles. The overall control unit 14 can calculate a distance from a point in the air in which the wind velocity is to be measured, to a position that a laser beam passes through, on the basis of the information of distance from the emission device 10 to the focal point in the emission direction of the laser beam which is included in the Doppler shift measurement data received through the individual control units 12 and the emission angle.

Further, the individual control unit 12 transmits Doppler shift measurement data measured by the emission device 10, to the overall control unit 14 (S8). The overall control unit 14 calculates a three-dimensional wind velocity at a point in the air in which wind velocities are to be measured, on the basis of the Doppler shift measurement data obtained from each individual control unit 12, emission direction of each laser beam, and a distance from each emission device 10 to the focal point in the laser beam emission direction (S9).

### Explanation on Numerals

10 Emission Device, 12 Individual Control Unit, 14 Overall Control Unit, 16 Observation Unit

## Claims

1. A wind velocity measurement system comprising:
an emission means which emits a plurality of laser beams in different directions;
an emission time control means which controls emission times of the plurality of laser beams emitted from the emission means;
a Doppler shift measurement means which detects the backscattered lights of the emitted laser beam, and measures a Doppler shift of the laser beam; and
a calculation means which calculates a wind velocity on the basis of an output from the Doppler shift measurement means.

2. A wind velocity measurement system according to claim 1, wherein the emission means emits three or more laser beams.

3. A wind velocity measurement system according to claim 1 or 2, wherein the emission time control means controls the emission means to emit the plurality of laser beams simultaneously or at a predetermined time interval.

4. A wind velocity measurement system according to any one of claims 1 to 3, wherein the plurality of laser beams emitted from the emission means pass within a predetermined range from a point in the air in which a wind velocity is to be measured.

5. A wind velocity measurement system according to any one of claims 1 to 4, wherein the calculation means obtains a wind distribution from the calculated wind velocity.

6. A wind velocity measurement system according to any one of claims 1 to 5, wherein the wind velocity calculated by the calculation means is used for operation management of a wind-power plant.
